(19) **Europäisches Patentamt / European Patent Office / Office européen des brevets**

(11) **EP 4 260 994 A1**

(12) **EUROPEAN PATENT APPLICATION**
published in accordance with Art. 153(4) EPC

(43) Date of publication:
**18.10.2023 Bulletin 2023/42**

(21) Application number: **21903082.2**

(22) Date of filing: **09.11.2021**

(51) International Patent Classification (IPC):
**B25J 13/08** (2006.01)  **G06T 7/00** (2017.01)
**G06N 20/00** (2019.01)

(52) Cooperative Patent Classification (CPC):
**B25J 13/08; G06N 20/00; G06T 7/00**

(86) International application number:
**PCT/JP2021/041069**

(87) International publication number:
**WO 2022/123978 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2020 JP 2020203202**

(71) Applicant: **Sony Group Corporation**
**Tokyo 108-0075 (JP)**

(72) Inventors:
• **SUZUKI, Hirotaka**
**Tokyo 108-0075 (JP)**
• **BABA, Shoichi**
**Tokyo 108-0075 (JP)**

(74) Representative: **D Young & Co LLP**
**120 Holborn**
**London EC1N 2DY (GB)**

(54) **TRAINING DEVICE, TRAINING SYSTEM, AND TRAINING METHOD**

(57) A learning device (20) includes: an acquisition unit (23a) that acquires, from a robot capable of executing a predetermined operation, an image of an operation target after execution of the operation and a determined success/failure result of the operation; a learning unit (23f) that learns, based on the success/failure result, an estimation model in which the image is input and when each of pixels of the image is set as an operation position, an estimated success rate of each of the pixels is output; and a determination unit (23d) that determines a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rate.

FIG.5B

EP 4 260 994 A1

**Description**

Field

The present disclosure relates to a learning device, a learning system, and a learning method. Background
Conventionally, there is known a robot system that performs an operation of holding and taking out workpieces stacked on a tray or the like by an end effector of a multi-axis robot, a so-called picking operation. In such a robot system, it tends to cost a lot to program the picking operation one by one according to the situation of the workpiece or the robot.
Therefore, a technique for improving the efficiency of robot programming by a learning-based method using a 3D camera and deep learning has been proposed (See, for example, Patent Literature 1.).

Citation List

Patent Literature

Patent Literature 1: JP 2017-030135 A

Summary

Technical Problem

However, there is still room for further improvement in the above-described conventional technique in order to enable higher performance and more efficient learning without manual intervention.
For example, in a case where the above-described conventional technique is used, there is a case where accurate 3D measurement cannot be performed depending on a size of the workpiece, a material of a surface, and the like, and thus, there is a possibility that learning performance is deteriorated.
Furthermore, the learning-based method requires a lot of label data in the learning process, but there is a problem that it takes a lot of time to collect a sufficient amount of label data for learning from a random trial of the robot in order to eliminate manpower. On the other hand, if the collection is performed manually, it is a matter of course against labor saving.
Therefore, the present disclosure proposes a learning device, a learning system, and a learning method capable of enabling higher performance and more efficient learning without manual intervention.

Solution to Problem

In order to solve the above problems, one aspect of a learning device according to the present disclosure includes: an acquisition unit that acquires, from a robot capable of executing a predetermined operation, an image of an operation target after execution of the operation and a determined success/failure result of the operation; a learning unit that learns, based on the success/failure result, an estimation model in which the image is input and when each of pixels of the image is set as an operation position, an estimated success rate of each of the pixels is output; and a determination unit that determines a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rate.

Brief Description of Drawings

FIG. 1 is a diagram illustrating a configuration example of a robot system according to an embodiment of the present disclosure.
FIG. 2 is a diagram illustrating an example of a pick operation.
FIG. 3 is a schematic explanatory diagram (part 1) of a learning method according to an embodiment of the present disclosure.
FIG. 4 is a schematic explanatory diagram (part 2) of the learning method according to the embodiment of the present disclosure.
FIG. 5A is a block diagram illustrating a configuration example of a control device of a learning system according to an embodiment of the present disclosure.

FIG. 5B is a block diagram illustrating a configuration example of a learning device of the learning system according to the embodiment of the present disclosure.

FIG. 5C is a block diagram illustrating a configuration example of a stirring operation control unit.

FIG. 5D is a block diagram illustrating a configuration example of a determination unit.

FIG. 5E is a block diagram illustrating a configuration example of a learning unit.

FIG. 6 is an explanatory diagram of three basic strategies for determining pick coordinates in active learning.

FIG. 7 is a quantitative comparison experimental result (part 1) of the basic three strategies.

FIG. 8 is a quantitative comparison experimental result (part 2) of the basic three strategies.

FIG. 9 is an explanatory diagram (part 1) of an action strategy in active learning according to an embodiment of the present disclosure.

FIG. 10 is an explanatory diagram (part 2) of an action strategy in active learning according to an embodiment of the present disclosure.

FIG. 11 illustrates a result (part 1) of a comparative experiment including mixing #1 and #2.

FIG. 12 illustrates a result (part 2) of a comparative experiment including mixing #1 and #2.

FIG. 13 is a flowchart illustrating a processing procedure of learning processing executed by a learning unit.

FIG. 14 is a processing explanatory diagram (part 1) of each processing in the learning processing.

FIG. 15 is a processing explanatory diagram (part 2) of each processing in the learning processing.

FIG. 16 is a processing explanatory diagram (part 3) of each processing in the learning processing.

FIG. 17 is a processing explanatory diagram (part 4) of each processing in the learning processing.

FIG. 18 is a processing explanatory diagram (part 5) of each processing in the learning processing.

FIG. 19 is a flowchart illustrating a processing procedure of stirring operation control processing executed by a stirring operation control unit.

FIG. 20 is a processing explanatory diagram (part 1) of each processing in the stirring operation control processing.

FIG. 21 is a processing explanatory diagram (part 2) of each processing in the stirring operation control processing.

FIG. 22 is a processing explanatory diagram (part 3) of each processing in the stirring operation control processing.

FIG. 23 is a processing explanatory diagram (part 4) of each processing in the stirring operation control processing.

FIG. 24 is a processing explanatory diagram (part 5) of each processing in the stirring operation control processing.

FIG. 25 is a processing explanatory diagram (part 6) of each processing in the stirring operation control processing.

FIG. 26 is a hardware configuration diagram illustrating an example of a computer that implements functions of the learning device.

Description of Embodiments

Hereinafter, embodiments of the present disclosure will be described in detail with reference to the drawings. Note that, in each of the following embodiments, the same parts are denoted by the same signs, and redundant description will be omitted.

Furthermore, hereinafter, "picking" may be referred to as "pick" for convenience of description.

Furthermore, the present disclosure will be described according to the following item order.

1. Overview of embodiment of present disclosure
2. Configuration of learning system
2-1. Configuration of control device 2-2. Configuration of learning device 3. Modification examples
4. Hardware configuration
5. Conclusion

<<1. Overview of embodiment of present disclosure>>

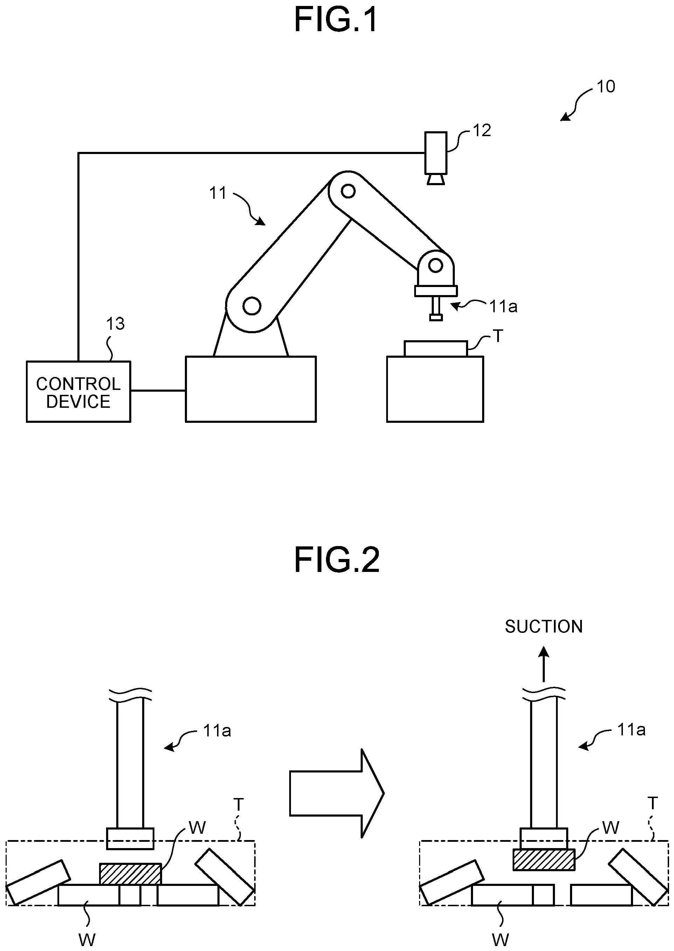

First, a configuration example of a robot system 10 according to an embodiment of the present disclosure will be described. FIG. 1 is a diagram illustrating a configuration example of the robot system 10 according to an embodiment of the present disclosure. Furthermore, FIG. 2 is a diagram illustrating an example of a pick operation.

As illustrated in FIG. 1, the robot system 10 includes a robot 11, a camera 12, and a control device 13. The robot 11 is a multi-axis robot, for example, a vertical articulated robot.

The robot 11 includes an end effector 11a. The end effector 11a is attached to a distal end portion of an arm of the robot 11, and performs a picking operation of taking out workpieces W one by one from a tray T on which the workpieces W, which are parts to be picked, are stacked in bulk as illustrated in FIG. 2. FIG. 2 illustrates a state in which the workpiece W filled with oblique lines is picked by the end effector 11a by the suction method.

Note that, as illustrated in FIG. 2, in the embodiment of the present disclosure, for convenience of description, the end effector 11a holds the workpiece W by the suction method, but the holding method of the workpiece W is not limited. Therefore, the holding method of the workpiece W may be, for example, a chuck method. In the case of the chuck method, it is also necessary to consider an approach direction for picking up the workpiece W, but since it is easy to expand the learning method including such a case, the description thereof is omitted in the embodiment of the present disclosure.

The description returns to FIG. 1. The camera 12 is, for example, an RGB camera, and is provided at a position where an entire view of the tray T can be captured. The camera 12 captures an entire view of the tray T every time the robot 11 tries to perform a pick operation of the workpiece W.

The control device 13 is provided to be able to communicate with the robot 11 and the camera 12, and controls the robot system 10. The control device 13 controls the position and attitude of the robot 11 and the end effector 11a on the basis of the pick coordinates determined by a learning device 20 to be described later, and causes the end effector 11a to perform the pick operation.

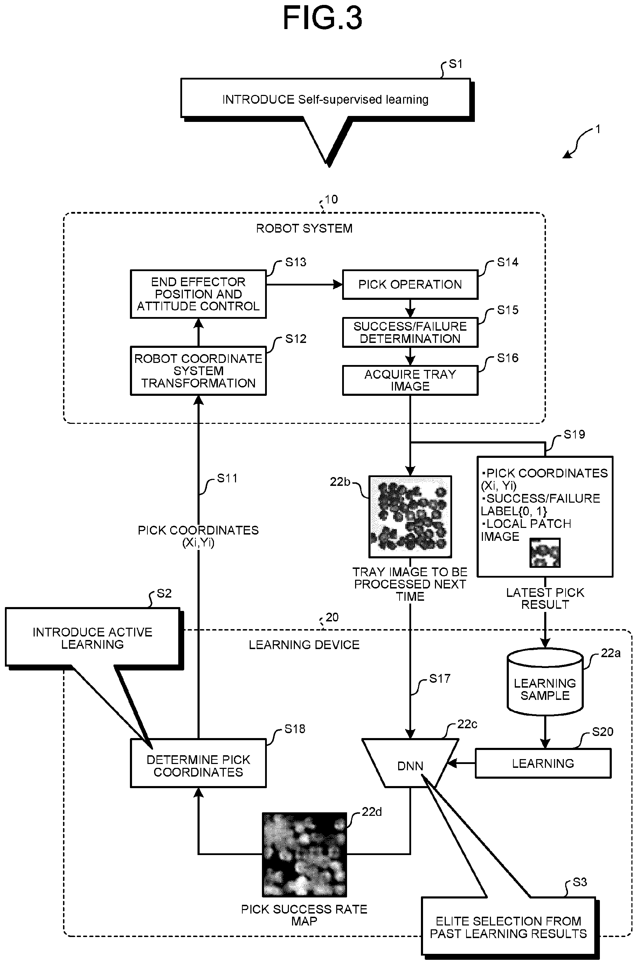

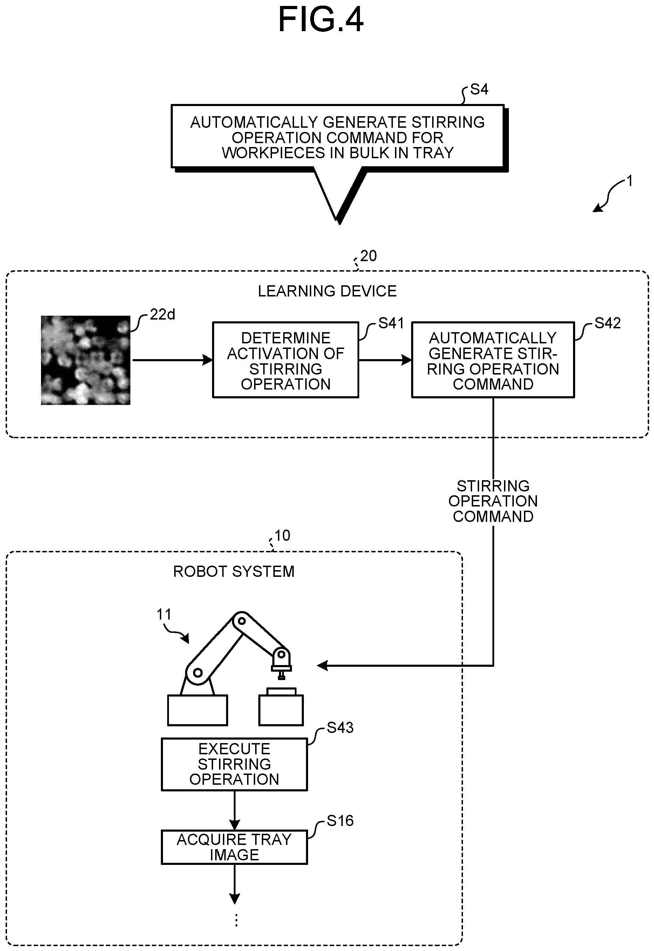

On the premise of such a robot system 10, an outline of a learning method according to an embodiment of the present disclosure will be described. FIG. 3 is a schematic explanatory diagram (part 1) of the learning method according to the embodiment of the present disclosure. Furthermore, FIG. 4 is a schematic explanatory diagram (part 2) of the learning method according to the embodiment of the present disclosure.

As illustrated in FIG. 3, in the learning method according to the embodiment of the present disclosure, first, "Self-supervised learning is introduced" (step S1). That is, by causing the robot 11 itself to evaluate whether or not the robot 11 has succeeded in picking, it is not necessary for a person to prepare label data. Note that, in the following, "Self-supervised learning" is described as "self-supervised learning".

Step S1 will be specifically described. As illustrated in FIG. 3, a learning system 1 according to the embodiment of the present disclosure includes the robot system 10 and a learning device 20. First, a command value of pick coordinates (Xi, Yi) corresponding to a pick position on the two-dimensional image captured by the camera 12 is transmitted from the learning device 20 to the robot system 10 (step S11).

In the robot system 10, the control device 13 transforms the pick coordinates (Xi, Yi) into a robot coordinate system which is a local coordinate system of the robot 11 (step S12). For example, the control device 13 transforms the pick coordinates (Xi, Yi) into the robot coordinates (Xr, Yr, Zr). In such a case, the control device 13 uses a normal calibration method using a transformation matrix for Xi → Xr, Yi → Yr. Furthermore, for Zr, the control device 13 uses some other method, for example, a method of fixing a value by a height value of a floor surface of the tray T when a spring mechanism is attached in a direction sinking in a vertical direction with respect to the end effector 11a. Alternatively, if a laser ranging meter (not illustrated) is used as a sensor, the control device 13 may use a method of measuring a height from a pick center position of the end effector 11a to a floor surface of the workpiece W or the tray T immediately below, and calculating back from the measured value.

Then, the control device 13 performs position and attitude control of the end effector 11a with a pick preparation position as a target value (step S13). When the pick preparation position is Pp = (Xp, Yp, Zp), Xp = Xr and Yp = Yr are set, and Zp is set to the same value as the current position Zc. That is, the robot system 10 horizontally moves the end effector 11a without changing the height of the end effector with respect to the pick position.

Then, the control device 13 causes the end effector 11a to perform the pick operation (step S14). Specifically, the control device 13 vertically lowers the end effector 11a from the pick preparation position. At this time, the control device 13 sets the height target value Zp to Zr. Then, when the height of the end effector 11a reaches Zp, the control device 13 performs suction.

After the suction, the control device 13 returns the height of the end effector 11a to Zp (the position of the end effector 11a is Pp), and performs success/failure determination (step S15). In the case of the suction method, the control device 13 measures the air pressure during the suction, and when the air pressure falls below a predetermined threshold and it is determined that the workpiece W is in a vacuum state, it is determined that the workpiece W is normally sucked and "pick success (= 1)" is obtained. Otherwise, the control device 13 determines "pick failure (= 0)".

Note that an operation after suction varies depending on the application or the like, but for example, at the time of successful picking, the sucked workpiece W is moved to a predetermined place of the next step, suction is released at the movement destination, and the end effector 11a is returned to the pick preparation position Pp. In the case of failure, nothing may be particularly performed.

Then, the control device 13 acquires a tray image to be processed next time, which is captured by the camera 12, from the camera 12 (step S16). At this time, if the end effector 11a is at a position reflected in the tray image, the end effector 11a may be retracted from an imaging area of the camera 12. Then, the control device 13 transmits an acquired tray image 22b to the learning device 20 (step S17).

The learning device 20 inputs the tray image 22b to a deep neural network (DNN) 22c which is a deep neural network for estimating a pick success rate, and obtains an estimated success rate in a case where picking is performed for each pixel on the image as a result of DNN forward calculation. The estimated success rate is obtained as a pick success rate map 22d which is a black-and-white grayscale map displayed as an image.

Then, the learning device 20 determines which plane coordinates of the tray image 22b are to be the next pick coordinates (Xi, Yi) based on a certain determination rule using the pick success rate map 22d (step S18). Then, the learning device 20 transmits the determined pick coordinates (Xi, Yi) to the robot system 10, and returns to step S11.

Note that in the robot system 10, the control device 13 transmits the latest pick result to the learning device 20 together with step S17 (step S19). The latest pick result data is, for example, pick coordinates (Xi, Yi), a success/failure label "0" or "1", a local patch image around the pick coordinates (Xi, Yi), or the like.

The learning device 20 accumulates the latest pick result data in a learning sample 22a in pair with the trial number (repetition number). Then, the learning device 20 performs learning (weight update) from the learning sample 22a to DNN 22c at a predetermined timing (step S20) .

By the learning cycle of the "self-supervised learning" by repetition of steps S11 to S20, the success/failure determination is performed by the robot system 10 itself, and it is not necessary to prepare label data labeled by a person in the learning of the DNN 22c. Therefore, more efficient learning can be performed without manual intervention.

Furthermore, in the learning method according to the embodiment of the present disclosure, when the pick coordinates of the workpiece W are determined in step S18, "active learning is introduced" (step S2).

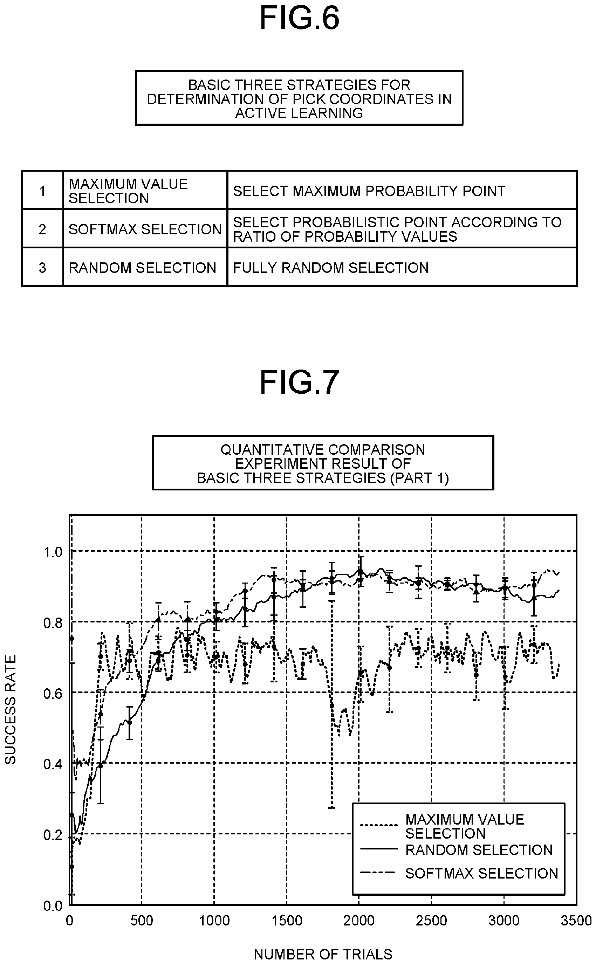

The above-described "self-supervised learning" is a method of collecting and learning a learning sample on the basis of a trial and error operation of the robot 11. However, it is possible to more efficiently collect a success label by performing the trial and error operation not only by perfect random sampling but also by a method using an output estimation value of the DNN 22c that has been learned so far. Details of step S2 will be described later with reference to FIGS. 6 to 12.

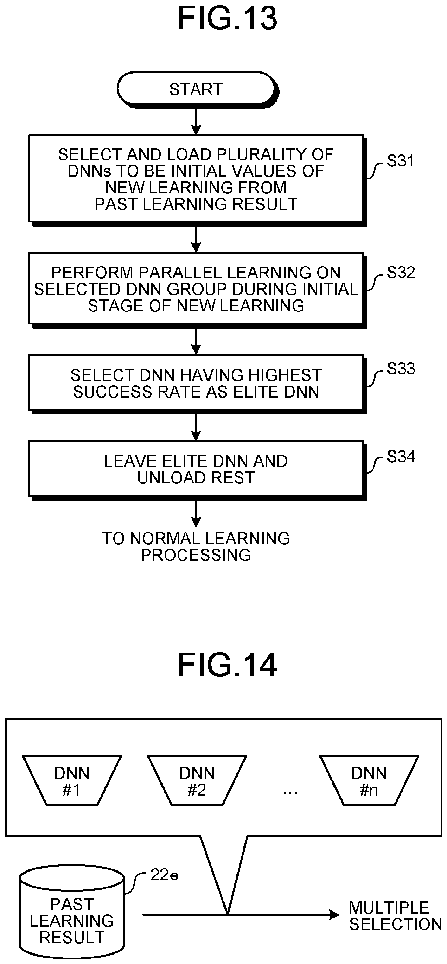

Furthermore, in the learning method according to the embodiment of the present disclosure, elite selection from past learning results is performed at an initial stage of the learning cycle described above (step S3). The past learning result is, for example, a DNN parameter group learned in the past. By using a learning parameter transfer method of transferring an initial parameter of the DNN 22c to be a new learning target from the past learning result, it is possible to accelerate the startup of learning. Details of step S3 will be described later with reference to FIGS. 13 to 18.

Furthermore, as illustrated in FIG. 4, in the learning method according to the embodiment of the present disclosure, a stirring operation command for the workpieces W stacked in bulk in the tray T is automatically generated in order to facilitate succeeding in the next and subsequent picking (step S4).

Specifically, as illustrated in FIG. 4, the learning device 20 determines activation of the stirring operation based on the pick success rate map 22d (step S41). Such determination is performed, for example, on the basis of entropy calculated from the pick success rate map 22d.

Then, when it is determined that the stirring operation needs to be activated, the learning device 20 automatically generates a stirring operation command (step S42). Then, the generated stirring operation command is transmitted to the control device 13 of the robot system 10, and the robot 11 is caused to execute the stirring operation of the tray T (step S43). Then, the processing from step S16 is repeated.

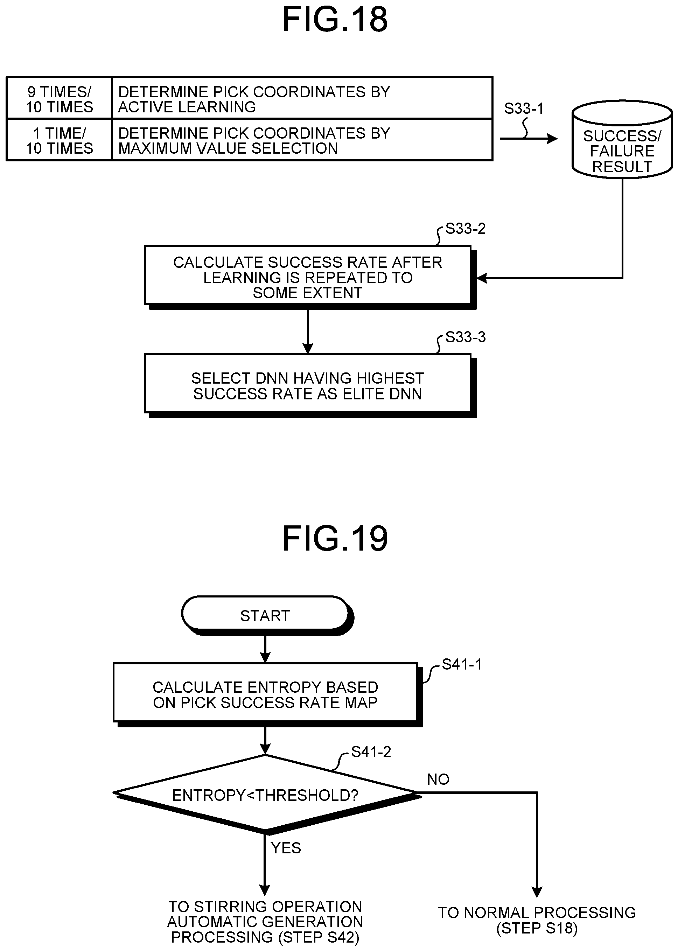

In this way, by changing the state in the tray T by the stirring operation, it is possible to eliminate a state in which it is difficult to pick, such as a state in which the workpiece W remains clattering on an inner wall of the tray T, and it is possible to reduce a case in which picking fails continuously. Details of step S4 will be described later with reference to FIGS. 19 to 25.

Hereinafter, a configuration example of the learning system 1 to which the learning method according to the above-described embodiment is applied will be described more specifically.

<<2. Configuration of learning system>>

<2-1. Configuration of control device>

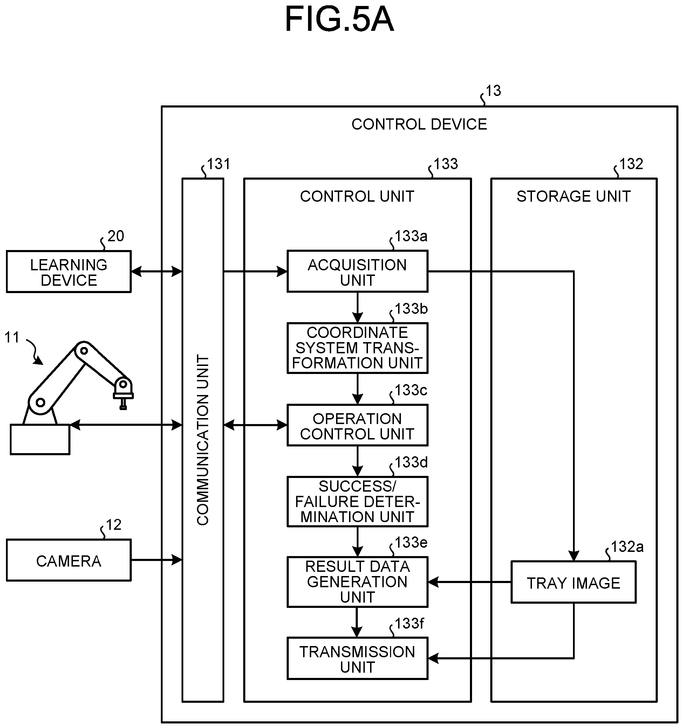

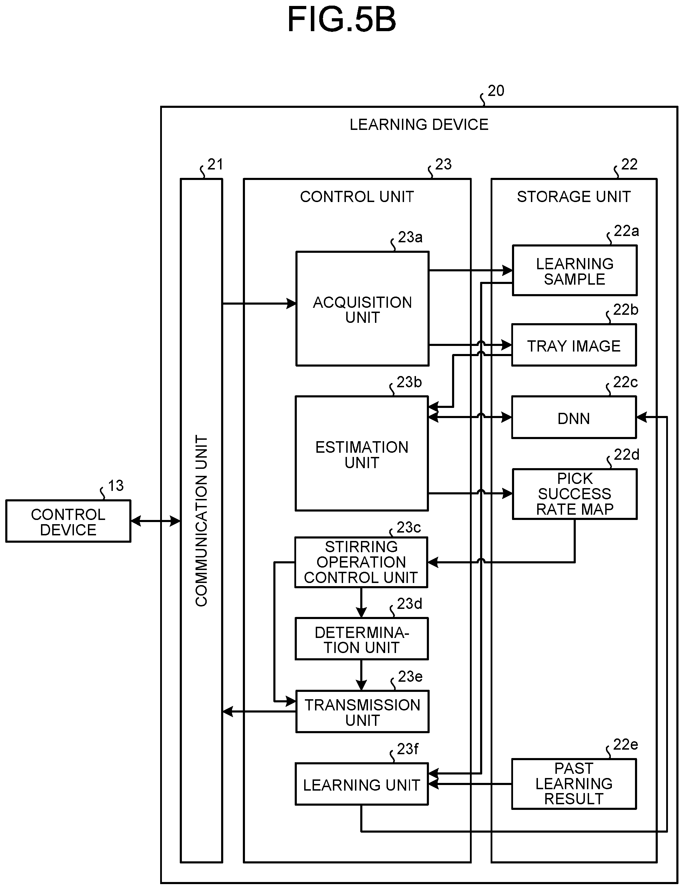

First, a configuration example of the control device 13 of the robot system 10 included in the learning system 1 will be described. FIG. 5A is a block diagram illustrating a configuration example of the control device 13 according to the embodiment of the present disclosure. Note that, in FIG. 5A and FIGS. 5B to 5E illustrated later, only components necessary for describing features of the present embodiment are illustrated, and descriptions of general components are omitted.

In other words, each component illustrated in FIGS. 5A to 5E is functionally conceptual, and does not necessarily need to be physically configured as illustrated. For example, a specific form of distribution and integration of each block is not limited to the illustrated form, and all or a part thereof can be functionally or physically distributed and integrated in an arbitrary unit according to various loads, usage conditions, and the like.

Furthermore, in the description using FIGS. 5A to 5E, the description of the already described components may be simplified or omitted.

As illustrated in FIG. 5A, the control device 13 includes a communication unit 131, a storage unit 132, and a control unit 133. The communication unit 131 is realized by, for example, a network interface card (NIC) or the like. The communication unit 131 is connected to the robot 11, the camera 12, and the learning device 20 in a wireless or wired manner, and transmits and receives information to and from the robot 11, the camera 12, and the learning device 20.

The storage unit 132 is realized by, for example, a semiconductor memory element such as a random access memory (RAM), a read only memory (ROM), or a flash memory, or a storage device such as a hard disk or an optical disk. In the example illustrated in FIG. 5A, the storage unit 132 stores a tray image 132a. The tray image 132a is an entire view image of the tray T captured each time the robot 11 attempts the pick operation of the workpiece W.

The control unit 133 is a controller, and is implemented by, for example, a central processing unit (CPU), a micro processing unit (MPU), or the like executing various programs stored in the storage unit 132 using a RAM as a work area. Furthermore, the control unit 133 can be realized by, for example, an integrated circuit such as an application specific integrated circuit (ASIC) or a field programmable gate array (FPGA).

The control unit 133 includes an acquisition unit 133a, a coordinate system transformation unit 133b, an operation control unit 133c, a success/failure determination unit 133d, a result data generation unit 133e, and a transmission unit 133f, and realizes or executes a function and an action of information processing described below.

The acquisition unit 133a acquires the pick coordinates transmitted from the learning device 20 via the communication unit 131 (corresponding to step S11 described above). Furthermore, the acquisition unit 133a acquires the entire view image of the tray T captured by the camera 12 via the communication unit 131, and stores the image as the tray image 132a (corresponding to step S16 described above).

The coordinate system transformation unit 133b performs coordinate system transformation processing of transforming the pick coordinates acquired by the acquisition unit 133a into the robot coordinate system (corresponding to step S12 described above). The operation control unit 133c executes operation control processing of the robot 11 on the basis of the processing result of the coordinate system transformation unit 133b (corresponding to steps S13 and S14 described above).

The success/failure determination unit 133d executes success/failure determination processing of the pick operation based on the operation control result by the operation control unit 133c (corresponding to step S15 described above). The result data generation unit 133e generates the above-described latest pick result data based on the determination result of the success/failure determination unit 133d and the tray image 132a.

The transmission unit 133f transmits the tray image 132a to the learning device 20 via the communication unit 131 (corresponding to step S17 described above). Furthermore, the transmission unit 133f transmits the latest pick result data generated by the result data generation unit 133e to the learning device 20 via the communication unit 131 (corresponding to step S19 described above).

<2-2. Configuration of learning device>

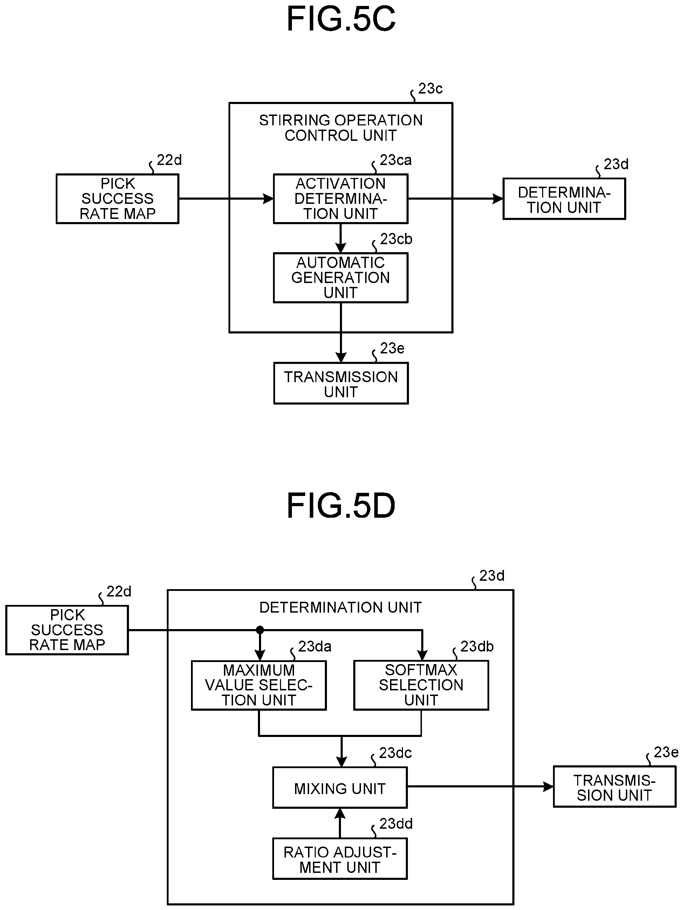

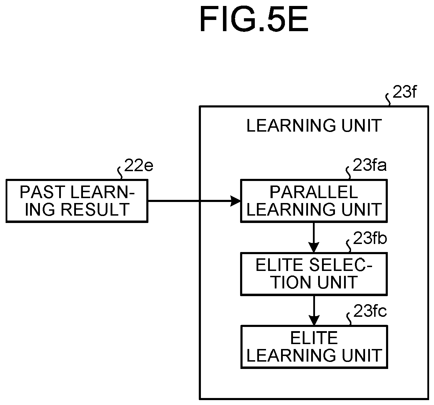

Next, a configuration example of the learning device 20 included in the learning system 1 will be described. FIG. 5B is a block diagram illustrating a configuration example of the learning device 20 according to the embodiment of the present disclosure. Furthermore, FIG. 5C is a block diagram illustrating a configuration example of a stirring operation control unit 23c. Furthermore, FIG. 5D is a block diagram illustrating a configuration example of a determination unit 23d. Furthermore, FIG. 5E is a block diagram illustrating a configuration example of a learning unit 23f.

As illustrated in FIG. 5B, the learning device 20 includes a communication unit 21, a storage unit 22, and a control unit 23. Similarly to the communication unit 131, the communication unit 21 is realized by, for example, a network interface card (NIC) or the like. The communication unit 21 is connected to the control device 13 in a wireless or wired manner, and transmits and receives information to and from the control device 13.

Similarly to the storage unit 132, the storage unit 22 is realized by, for example, a semiconductor memory element such as a RAM, a ROM, or a flash memory, or a storage device such as a hard disk or an optical disk. In the example illustrated in FIG. 5B, the storage unit 22 stores a learning sample 22a, a tray image 22b, a DNN 22c, a pick success rate map 22d, and a past learning result 22e.

Similarly to the control unit 133, the control unit 23 is a controller, and is implemented by, for example, a CPU, an MPU, or the like executing various programs stored in the storage unit 22 using a RAM as a work area. Furthermore, similarly to the control unit 133, the control unit 23 can be realized by, for example, an integrated circuit such as an ASIC or an FPGA.

The control unit 23 includes an acquisition unit 23a, an estimation unit 23b, a stirring operation control unit 23c, a determination unit 23d, a transmission unit 23e, and a learning unit 23f, and implements or executes functions and actions of information processing described below.

The acquisition unit 23a acquires the latest pick result data transmitted from the control device 13 via the communication unit 21 and accumulates the data in the learning sample 22a. The acquisition unit 23a acquires the tray image 132a transmitted from the control device 13 via the communication unit 21, and stores the tray image 132a as the tray image 22b.

The estimation unit 23b inputs the tray image 22b to the DNN 22c, obtains an output estimation value of the DNN 22c, and stores the output estimation value as the pick success rate map 22d.

The stirring operation control unit 23c automatically generates a stirring operation command for the workpiece W in the tray T corresponding to step S4 described above based on the pick success rate map 22d, and executes stirring operation control processing of causing the control device 13 to perform the stirring operation of the robot 11.

Here, as illustrated in FIG. 5C, the stirring operation control unit 23c includes an activation determination unit 23ca and an automatic generation unit 23cb.

The activation determination unit 23ca determines activation of a stirring operation based on the pick success rate map 22d (corresponding to step S41 described above). The automatic generation unit 23cb automatically generates a stirring operation command when the activation determination unit 23ca determines that the stirring operation needs to be activated (corresponding to step S42 described above). Furthermore, the automatic generation unit 23cb causes the transmission unit 23e to transmit the generated stirring operation command to the control device 13.

Furthermore, when the activation determination unit 23ca determines that it is not necessary to activate the stirring operation, the activation determination unit 23ca causes the determination unit 23d to determine the next pick coordinates on the basis of the pick success rate map 22d. More specific contents of the processing executed by the stirring operation control unit 23c will be described later with reference to FIGS. 19 to 25.

The description returns to FIG. 5B. The determination unit 23d determines the next pick coordinates based on the pick success rate map 22d (corresponding to step S18 described above). As illustrated in FIG. 5D, the determination unit 23d includes a maximum value selection unit 23da, a softmax selection unit 23db, a mixing unit 23dc, and a ratio adjustment unit 23dd.

By the way, in the learning method according to the embodiment of the present disclosure, the point of introducing the active learning in determining the next pick coordinates has already been described. Therefore, prior to the description of each component of the determination unit 23d illustrated in FIG. 5D, the introduction of such active learning will be described with reference to FIGS. 6 to 12.

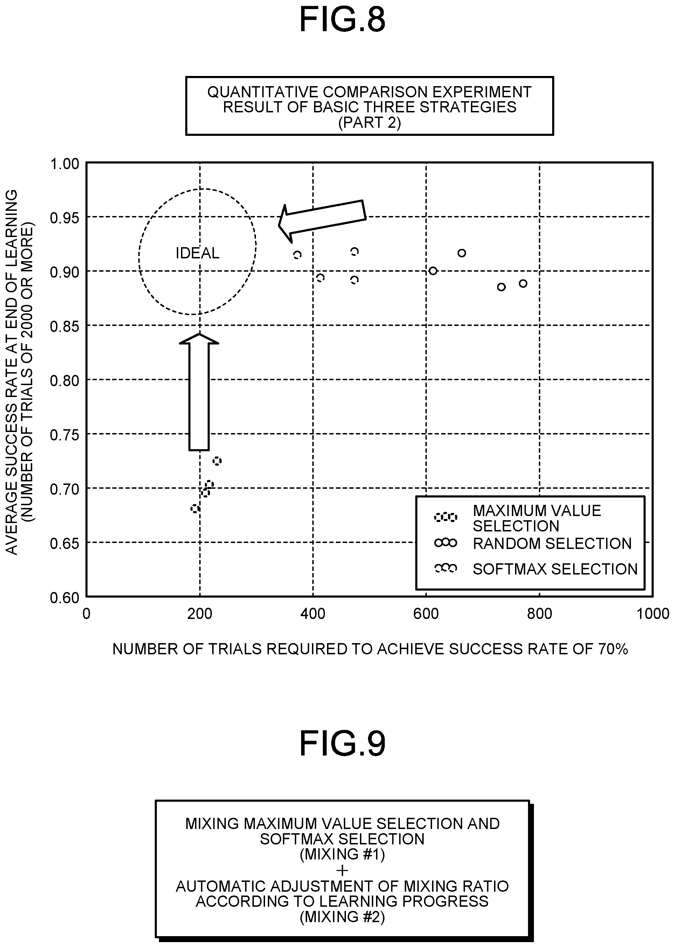

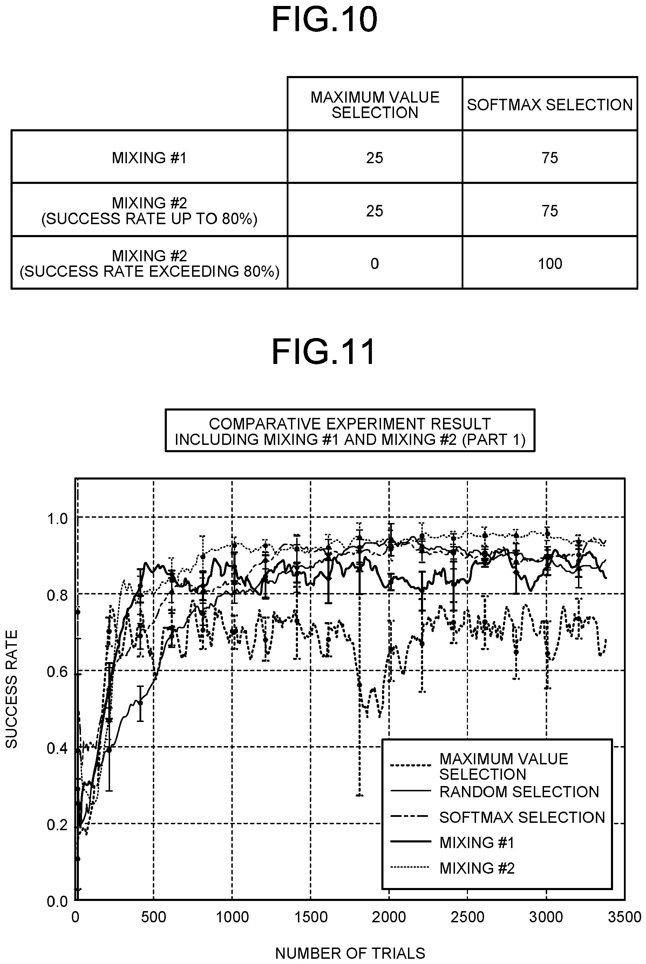

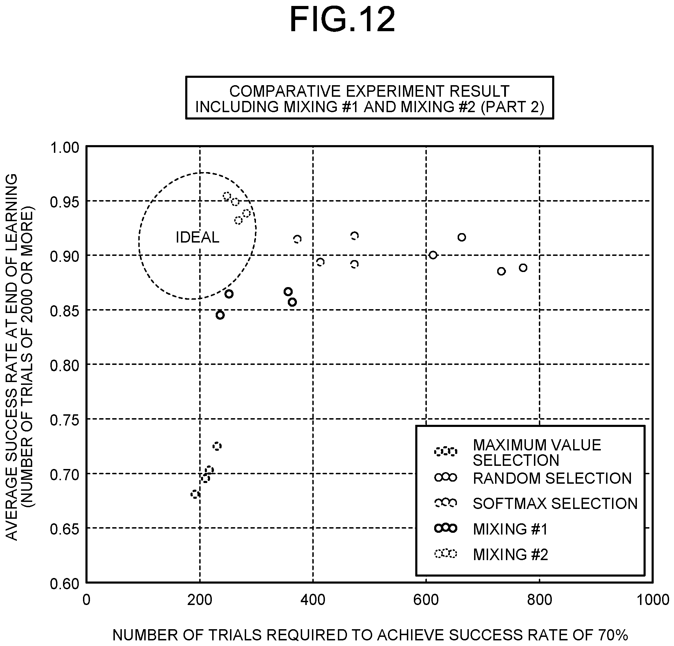

FIG. 6 is an explanatory diagram of three basic strategies for determining pick coordinates in the active learning. Furthermore, FIG. 7 is a quantitative comparison experimental result (part 1) of the basic three strategies. FIG. 8 is a quantitative comparison experimental result (part 2) of the basic three strategies. FIG. 9 is an explanatory diagram (part 1) of an action strategy in the active learning according to the embodiment of the present disclosure. FIG. 10 is an explanatory diagram (part 2) of the action strategy in the active learning according to the embodiment of the present disclosure. FIG. 11 illustrates the results (part 1) of the comparative experiment including mixing #1 and #2. FIG. 12 illustrates the results (part 2) of the comparative experiment including mixing #1 and #2.

Note that in the comparative experiments illustrated in FIGS. 7 and 8 and FIGS. 11 and 12, learning is newly started in a state where 70 workpieces W, which are 1 cm square pieces, are stacked in bulk on the tray T, and 70 workpieces W are resupplied after being completely taken from the tray T.

In FIGS. 7 and 11, a horizontal axis represents the number of trials, and a vertical axis represents the success rate. The success rate indicates a moving average of past 50 trials. Furthermore, in FIGS. 7 and 11, the dispersion is superimposed on an average of four experiments.

Furthermore, in FIGS. 8 and 12, a horizontal axis represents the number of trials required to achieve a success rate of 70%, and a vertical axis represents an average success rate at the end of learning (the number of trials is 2000 or more). In FIGS. 8 and 12, four experiments are plotted.

Considering what is an action strategy for achieving higher learning performance with a smaller number of trials when determining the next pick coordinates on the basis of the pick success rate map 22d is defined as an "action", three basic strategies of a "maximum value selection", a "softmax selection", and a "random selection" can be mentioned as illustrated in FIG. 6.

First, regarding the "random selection" of "3" for performing completely random selection, the learning sample 22a is accumulated only from the trial and error operation of the robot 11 to perform learning. In the case of such "random selection", it is not necessarily required to be online learning, and processing may be performed in two stages of a data recording phase in which data for which a large number of random pick operations have been tried is stored as the learning sample 22a, and a learning phase in which the DNN 22c is learned by batch processing using the data.

In the "random selection", the DNN 22c can be used as an estimation model of an optimum pick success rate by theoretically learning the DNN 22c from data on which infinite trials have been performed. However, the "random selection" is not preferable from the viewpoint of learning efficiency. As illustrated in FIGS. 7 and 8, the "random selection" has a characteristic that rising until final learning performance is obtained is slow.

On the other hand, as illustrated in FIG. 6, the optimal strategy in a case where the DNN 22c has already learned is "maximum value selection" of "1" for selecting a maximum probability point in the pick success rate map 22d. However, in the case of the "maximum value selection", in a stage where learning is not sufficient, erroneous pick coordinates that cannot be picked may be selected, and there is a possibility that learning does not proceed easily due to such an error, and learning performance is not improved due to a local solution. That is, as illustrated in FIGS. 7 and 8, in the "maximum value selection", the learning starts early, but the final performance is low.

Therefore, when the learning concept of "active learning" used in the field of machine learning is introduced, first, "softmax selection" that is a mixture of the "maximum value selection" and the "random selection" is conceivable (See "2" in FIG. 6).

The "softmax selection" is probabilistic point selection according to a ratio of probability values, and is determined by the following Formula (1).

$$P_i = \frac{q_i}{\sum_{j=1}^{N} q_j} \tag{1}$$

Note that $P_i$ is a probability that the i-th pixel is selected. The denominator on the right side is the sum of the pick success rates of all the pixels, and the numerator $q_i$ is the pick success rate of the i-th pixel. According to such "softmax selection", the higher the success rate, the easier the selection, but the coordinates with a low success rate are also selected to some extent. That is, complementary effects of the "maximum value selection" and the "random selection" can be expected. Indeed, also looking at FIGS. 7 and 8, it can be seen that the rising is improved over the "random selection" and the final performance is equivalent to the "random selection".

Note that it is ideal to finally obtain the learning speed and the final performance plotted in an "ideal" area illustrated in FIG. 8. Therefore, as illustrated in FIG. 9, in the learning method according to the embodiment of the present disclosure, the "maximum value selection" and the "softmax selection " are mixed as action strategies in active learning (hereinafter, appropriately referred to as "mixing #1"). Furthermore, a mixing ratio of the mixing #1 is automatically adjusted according to the learning progress (hereinafter, appropriately referred to as "mixing #2").

For example, as illustrated in FIG. 10, in the learning method according to the embodiment of the present disclosure, the "maximum value selection" and the "softmax selection" are mixed at 25:75 in the "mixing #1". In other words, in determining the pick coordinates, two strategies of the "maximum value selection" and the "softmax selection" are tried at a ratio of 25:75, and are randomly selected.

In the "mixing #2", the "maximum value selection" and the "softmax selection" are mixed at 25:75 until the success rate is 80%, and the "maximum value selection" and the "softmax selection" are set to 0:100 when the success rate exceeds 80%.

The experimental results including the cases of the "mixing #1" and the "mixing #2" are illustrated in FIGS. 11 and 12. As illustrated in FIGS. 11 and 12, it can be seen that according to the "mixing #1" or the "mixing #2", both the learning speed and the learning performance are improved and are closer to the "ideal" as compared with the basic three strategies.

Based on the above description using FIGS. 6 to 12, the description returns to FIG. 5D. In FIG. 5D, the maximum value selection unit 23da determines pick coordinates by the maximum value selection based on the pick success rate map 22d. Similarly, the softmax selection unit 23db determines pick coordinates by the softmax selection on the basis of the pick success rate map 22d.

The mixing unit 23dc attempts each of the determination by the maximum value selection unit 23da and the determination by the softmax selection unit 23db at a certain ratio and randomly selects. Then, the mixing unit 23dc causes the transmission unit 23e to transmit the selected pick coordinates to the control device 13. The ratio adjustment unit 23dd automatically adjusts the mixing ratio to be mixed by the mixing unit 23dc according to the progress of learning.

The description returns to FIG. 5B. In a case where the stirring operation control unit 23c automatically generates the stirring operation command, the transmission unit 23e transmits the stirring operation command to the control device 13 via the communication unit 21. Furthermore, the transmission unit 23e transmits the pick coordinates determined by the determination unit 23d to control device 13 via the communication unit 21.

The learning unit 23f learns the DNN 22c at a predetermined timing based on the learning sample 22a and the past learning result 22e. Here, as illustrated in FIG. 5E, the learning unit 23f includes a parallel learning unit 23fa, an elite selection unit 23fb, and an elite learning unit 23fc.

By the way, in the learning method according to the embodiment of the present disclosure, the fact that the elite selection is performed from the past learning result at the initial stage of the learning cycle has already been described. Therefore, prior to the description of each component of the learning unit 23f illustrated in FIG. 5E, the elite selection from such past learning results will be described with reference to FIGS. 13 to 18.

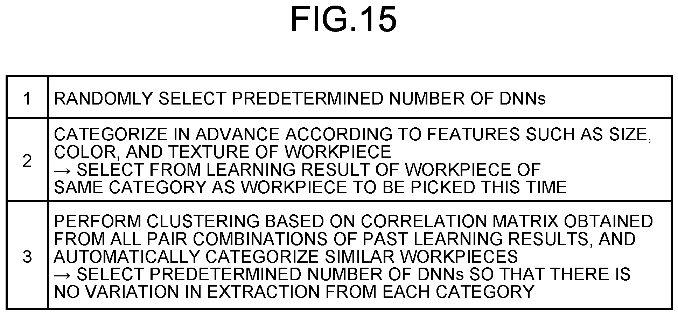

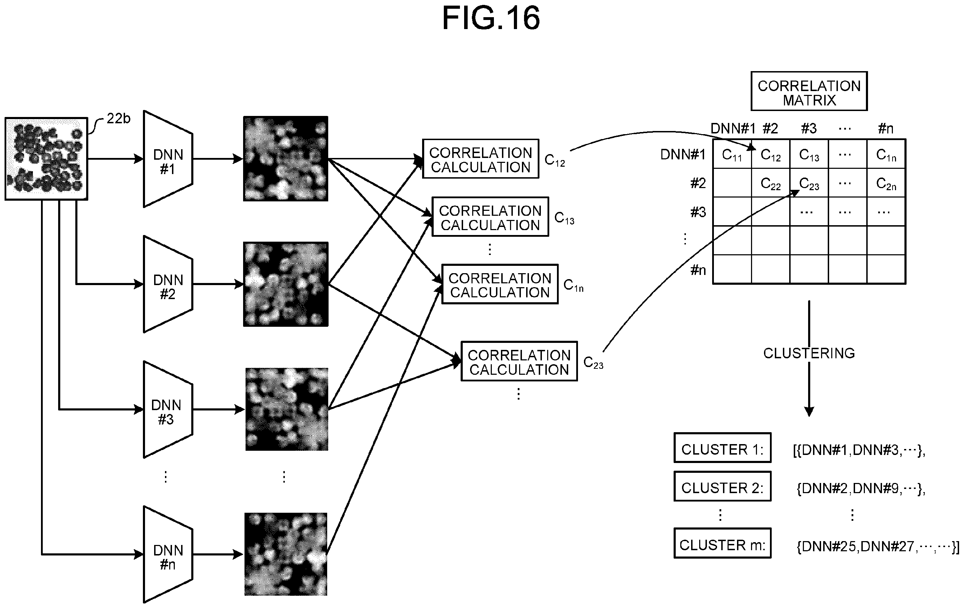

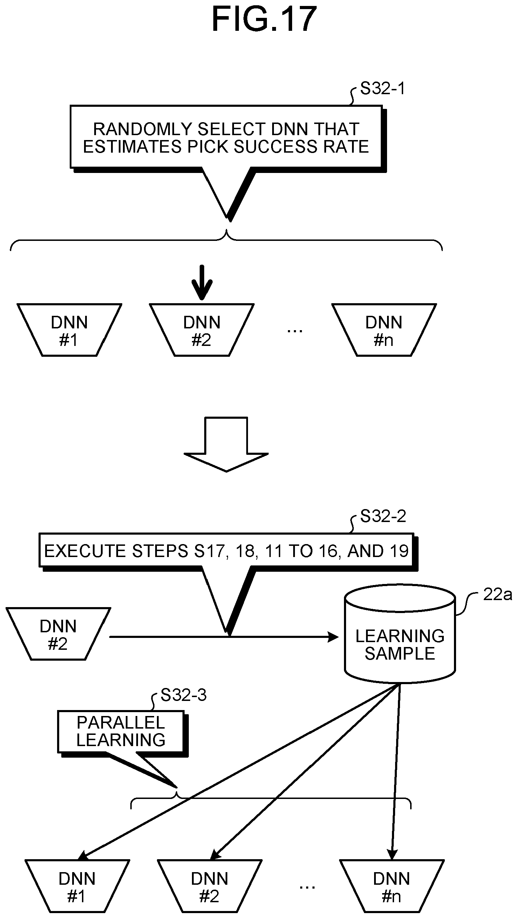

FIG. 13 is a flowchart illustrating a processing procedure of learning processing executed by the learning unit 23f. Furthermore, FIG. 14 is a processing explanatory diagram (part 1) of each processing in the learning processing. FIG. 15 is a processing explanatory diagram (part 2) of each processing in the learning processing. FIG. 16 is a processing explanatory diagram (part 3) of each processing in the learning processing. FIG. 17 is a processing explanatory diagram (part 4) of each processing in the learning processing. FIG. 18 is a processing explanatory diagram (part 5) of each processing in the learning processing.

As illustrated in FIG. 13, first, the learning unit 23f selects and loads a plurality of DNNs to be initial values of new learning from the past learning result 22e (step S31). Then, the learning unit 23f performs parallel learning on the selected DNN group during the initial stage of the new learning (step S32).

Then, the learning unit 23f selects a DNN having the highest success rate as an elite DNN through the initial stage (step S33). Then, the learning unit 23f leaves the elite DNN and unloads the rest (step S34), and then transitions to normal learning processing in which the left elite DNN is set as the DNN 22c.

As illustrated in FIG. 14, in step S31, the plurality of DNNs to be initial values of the new learning is selected from the past learning result 22e. At this time, as illustrated in "1" in FIG. 15, the learning unit 23f can randomly select a predetermined number of DNNs, for example.

Furthermore, as illustrated in "2" of FIG. 15, the learning unit 23f may select from the learning result of the workpiece W of the same category as the workpiece W to be picked this time, for example, from categorizations in advance according to features such as the size, color, and texture of the workpiece W.

Furthermore, as illustrated in "3" of FIG. 15, the learning unit 23f may perform clustering on the basis of a correlation matrix obtained from all pair combinations of the past learning result 22e, for example, and automatically categorize similar workpieces. In addition, the learning unit 23f may select a predetermined number of DNNs so that there is no variation in extraction from each category.

An example of "3" in FIG. 15 is more specifically illustrated in FIG. 16. It is assumed that DNN #1 to DNN #n exist in the past learning result 22e. In such a case, the learning unit 23f inputs the tray image 22b to all DNN #1 to DNN #n, and acquires a pick success rate map output from each of DNN #1 to DNN #n.

Then, the learning unit 23f performs correlation calculation on all the pair combinations of the pick success rate map to generate a correlation matrix including correlation coefficients for each pair combination of DNN #1 to DNN #n.

Then, the learning unit 23f performs clustering by spectral clustering or the like based on the correlation matrix, and automatically clusters each similar workpiece. As a result, it is possible to efficiently select a plurality of initial parameters for new learning without completely manual intervention and while reducing variations depending on the category.

Then, the learning unit 23f starts new learning and learns a plurality of selected DNN groups in parallel during an initial stage of the new learning. Specifically, as illustrated in FIG. 17, in each learning cycle, the learning unit 23f randomly selects a DNN for estimating the pick success rate from among the plurality of selected DNNs (step S32-1). Note that, in the example of FIG. 17, it is assumed that DNN #2 is selected.

Then, the learning system 1 executes steps S17, S18, S11 to S16, and S19 described above using the DNN #2 (step S32-2), and updates the learning sample 22a. Then, at a predetermined timing, the learning unit 23f learns all the plurality of selected DNNs in parallel using the learning sample 22a (step S32-3).

Note that, in the learning cycle, as illustrated in FIG. 18, for example, pick coordinates are determined by the active learning at a rate of about 9 times per 10 times, and pick coordinates are determined by the maximum value selection about once per 10 times. For the latter, the success/failure result is recorded (step S33-1).

Then, after learning is repeated to some extent (For example, after all DNNs selected in plural are involved in the maximum value selection 20 times or more, and the like.), the success rate up to that time is calculated (step S33-2). As a result, the learning unit 23f selects a DNN having the highest success rate as an elite DNN (step S33-3).

Based on the above description using FIGS. 13 to 18, the description returns to FIG. 5E. In FIG. 5E, the parallel learning unit 23fa selects and loads a plurality of DNNs as initial values of new learning from the past learning result 22e (corresponding to step S31 described above). Furthermore, the parallel learning unit 23fa performs parallel learning on the selected DNN group during the initial stage of the new learning (corresponding to step S32 described above).

The elite selection unit 23fb selects a DNN having the highest success rate as an elite DNN through the initial stage (corresponding to step S33 described above). The elite learning unit 23fc leaves the elite DNN and unloads the rest (corresponding to step S34 described above), and then executes normal learning processing with the left elite DNN as the DNN 22c.

Next, specific contents of the stirring operation control processing executed by the stirring operation control unit 23c will be described with reference to FIGS. 19 to 25.

FIG. 19 is a flowchart illustrating a processing procedure of the stirring operation control processing executed by the stirring operation control unit 23c. Note that FIG. 19 corresponds to the processing procedure of the activation determination processing executed by the activation determination unit 23ca of the stirring operation control unit 23c.

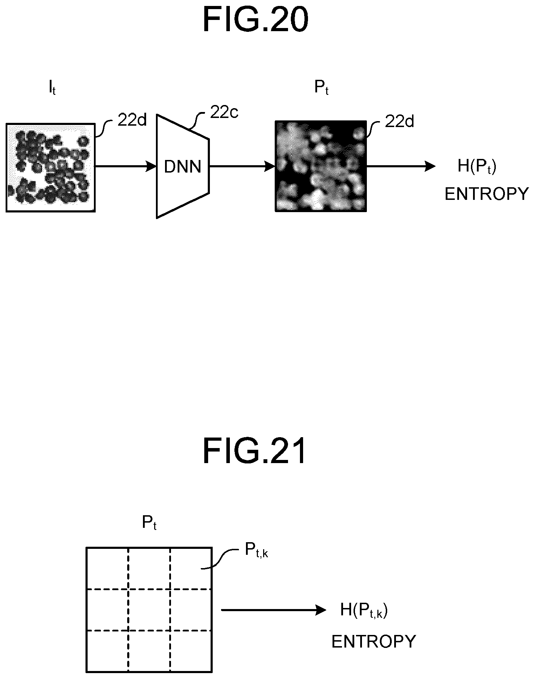

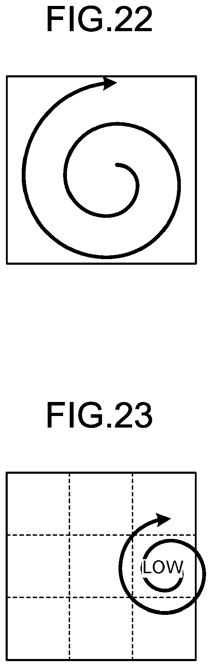

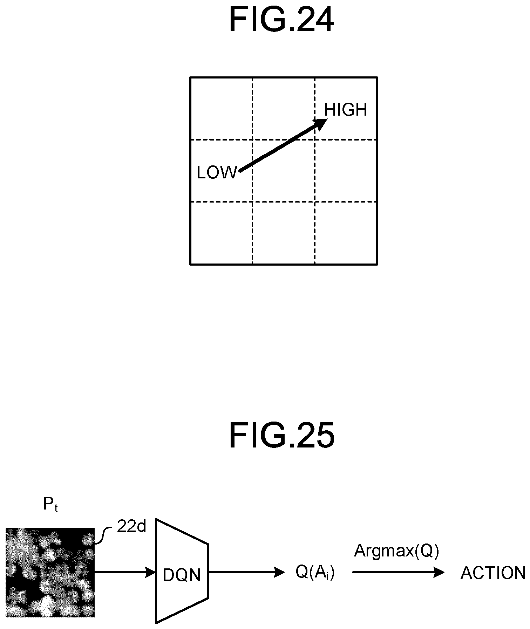

Furthermore, FIG. 20 is a processing explanatory diagram (part 1) of each processing in the stirring operation control processing. FIG. 21 is a processing explanatory diagram (part 2) of each processing in the stirring operation control processing. FIG. 22 is a processing explanatory diagram (part 3) of each processing in the stirring operation control processing. FIG. 23 is a processing explanatory diagram (part 4) of each processing in the stirring operation control processing. FIG. 24 is a processing explanatory diagram (part 5) of each processing in the stirring operation control processing. FIG. 25 is a processing explanatory diagram (part 6) of each processing in the stirring operation control processing.

As illustrated in FIG. 19, the activation determination unit 23ca of the stirring operation control unit 23c calculates entropy based on the pick success rate map 22d (step S41-1). Then, the activation determination unit 23ca determines whether or not the calculated entropy is lower than a predetermined threshold (step S41-2).

Here, in a case where the entropy is lower than the predetermined threshold (step S41-2, Yes), the stirring operation control unit 23c proceeds to the stirring operation command automatic generation processing in step S42 described above.

On the other hand, in a case where the entropy is larger than or equal to the predetermined threshold (step S41-2, No), the processing proceeds to the normal processing in step S18 described above.

As illustrated in FIG. 20, the entropy calculated in step S41-1 may be an overall entropy $H(P_t)$ of the pick success rate map 22d ("$P_t$") output by inputting the tray image 22b ("$I_t$") to the DNN 22c.

Alternatively, as illustrated in FIG. 21, a partial entropy $H(P_{t, k})$ which is an entropy of the block region $P_{t, k}$ of the pick success rate map $P_t$ may be used.

In a case where the overall entropy $H(P_t)$ is low, that is, in a state where the dispersion of the workpieces W in the tray T is macroscopically small and the workpieces W are locally gathered, the automatic generation unit 23cb of the stirring operation control unit 23c automatically generates an operation command to uniformly stir the entire inside of the tray T as illustrated in FIG. 22, for example.

In a case where the partial entropy $H(P_{t, k})$ is low, that is, in a state where the dispersion of the workpieces W in the block region $P_{t, k}$ microscopically is small and the workpieces W are locally gathered, the automatic generation unit 23cb automatically generates a stirring operation command for stirring around a region having a low entropy $H(P_{t, k})$ as illustrated in FIG. 23, for example.

Note that FIGS. 22 and 23 illustrate an example in which the inside of the tray T is stirred so as to draw a spiral trajectory, but the mode of the stirring operation is not limited. Therefore, the stirring may be performed so as to draw a trajectory other than the spiral shape.

Furthermore, the "stirring operation" described so far is merely an example of an action of changing the state in the tray T.

Therefore, for example, as illustrated in FIG. 24, the automatic generation unit 23cb may automatically generate, by the end effector 11a, an operation command of an action of sweeping from a region where the entropy $H(P_{t, k})$ is low toward a region where the entropy is high (an operation of sweeping with a broom).

Furthermore, in a case where the end effector 11a is of, for example, a chuck type, the state in the tray T may be changed by a tool for an action for changing the state in the tray T held by the end effector 11a.

Furthermore, the state inside the tray T may be changed, for example, by changing the inclination of the tray T or applying vibration to the tray T after making a placing table on which the tray T is placed movable instead of via the end effector 11a.

Furthermore, the automatic generation unit 23cb may determine an operation to be activated by learning. Specifically, as illustrated in FIG. 25, for example, as an example using reinforcement learning, a DQN (Deep-Q-Network) is configured with $P_t$ or $H(P_{t, k})$ as an input and a value estimation value $Q(A_i)$ for each ID(i) of a predefined action A as an output. Then, the DQN is learned by a general $\varepsilon$ greedy strategy using an average success rate within a certain period after activation of the operation as a reward signal.

Then, for example, when $P_t$ is input to the learned DQN, a value for each action $A_i$ is estimated, and thus, the automatic generation unit 23cb selects the action $A_i$ giving the maximum value (Argmax(Q)) and causes the robot 11 to execute the action $A_i$.

Note that, here, examples of the predefined action include an operation of moving the end effector 11a along a wall surface, an operation of moving the end effector 11a along a diagonal line of the tray T, and the like, in addition to the operations illustrated in FIGS. 22 to 24, the operation using the tool described above, and the operation of moving the tray T itself.

<<3. Modification examples>>

Note that the above-described embodiments can include some modification examples.

For example, in the above embodiment, the example in which the robot 11 is a vertical articulated robot has been described, but it is sufficient that the robot is a multi-axis robot provided so as to be able to pick the workpieces W stacked in bulk in the tray T, and for example, a parallel link robot or the like may be used. Furthermore, the number of the end effectors 11a is not limited to one, and two or more end effectors may be provided.

Furthermore, in the above-described embodiment, in the success/failure determination of the pick operation, it is determined that the end effector 11a has succeeded in attracting the workpiece W, but the contents of the success/failure determination are not limited. The contents of the success/failure determination may be appropriately determined according to an aspect of the process executed by the robot 11. For example, in a case where the aspect of the process is that it is required to reliably take out the workpiece W from the tray T, it may be determined that the process is successful when the robot 11 can take out the workpiece W to the outside of the tray T.

Among the processing described in the above embodiments, all or a part of the processing described as being performed automatically can be performed manually, or all or a part of the processing described as being performed manually can be performed automatically by a known method. In addition, the processing procedure, specific name, and information including various data and parameters illustrated in the document and the drawings can be arbitrarily changed unless otherwise specified. For example, the various types of information illustrated in each drawing are not limited to the illustrated information.

Furthermore, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. For example, the stirring operation control unit 23c and the determination unit 23d illustrated in FIG. 5B may be integrated. Furthermore, for example, the learning device 20 may also serve as the control device 13. Furthermore, for example, the robot 11, the camera 12, and the control device 13 may be integrally configured. That is, the robot 11 itself may be regarded as the robot system 10. Conversely, a part of the robot system 10 may be separated and configured separately. For example, the success/failure determination unit 133d and the result data generation unit 133e may be on a cloud server.

Furthermore, the above-described embodiments can be appropriately combined in a region in which the processing contents do not contradict each other. Furthermore, the order of each step illustrated in the sequence diagram or the flowchart of the present embodiment can be changed as appropriate.

<<4. Hardware configuration>>

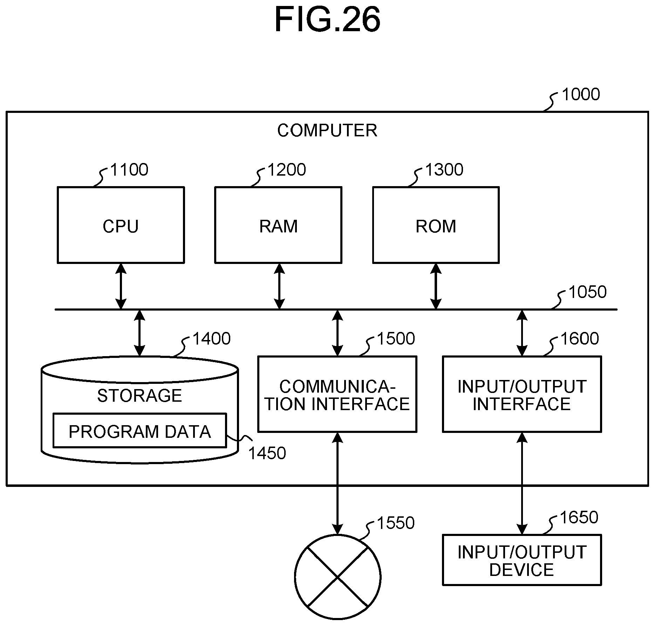

The control device 13 and the learning device 20 according to the above-described embodiments are realized by, for example, a computer 1000 having a configuration as illustrated in FIG. 26. The learning device 20 will be described as an example. FIG. 26 is a hardware configuration diagram illustrating an example of the computer 1000 that implements the functions of the learning device 20. The computer 1000 includes a CPU 1100, a RAM 1200, a ROM 1300, a storage 1400, a communication interface 1500, and an input/output interface 1600. Each unit of the computer 1000 is connected by a bus 1050.

The CPU 1100 operates on the basis of a program stored in the ROM 1300 or the storage 1400, and controls each unit. For example, the CPU 1100 develops a program stored in the ROM 1300 or the storage 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The storage 1400 is a computer-readable recording medium that non-transiently records a program executed by the CPU 1100, data used by the program, and the like. Specifically, the storage 1400 is a recording medium that records a program according to the present disclosure which is an example of program data 1450.

The communication interface 1500 is an interface for the computer 1000 to connect to an external network 1550. For example, the CPU 1100 receives data from other device or transmits data generated by the CPU 1100 to other device via the communication interface 1500.

The input/output interface 1600 is an interface for connecting an input/output device 1650 and the computer 1000. For example, the CPU 1100 can receive data from an input device such as a keyboard and a mouse via the input/output interface 1600. Furthermore, the CPU 1100 can transmit data to an output device such as a display, a speaker, or a printer via the input/output interface 1600. Furthermore, the input/output interface 1600 may function as a media interface that reads a program or the like recorded in a predetermined recording medium (media). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the learning device 20 according to the embodiment of the present disclosure, the CPU 1100 of the computer 1000 realizes the function of the control unit 23 by executing an information processing program loaded on the RAM 1200. Furthermore, the information processing program according to the present disclosure and data in the storage unit 22 are stored in the storage 1400. Note that the CPU 1100 reads the program data 1450 from the storage 1400 and executes the program data, but as another example, these programs may be acquired from another device via the external network 1550.

<<5. Conclusion>>

As described above, according to an embodiment of the present disclosure, the learning device 20 includes: the acquisition unit 23a that acquires a tray image 22b (corresponding to an example of an "operation target image") after execution of a pick operation and a determined success/failure result of the pick operation from the robot system 10 (corresponding to an example of a "robot") capable of executing the pick operation (corresponding to an example of a "predetermined operation") of holding the workpieces W stacked in bulk on the tray T and taking out the workpieces W from the tray T; the learning unit 23f that, based on the success/failure result, learns the DNN 22c (corresponding to an example of an "estimation model") that receives the tray image 22b and outputs the pick success rate map 22d (corresponding to an example of an "estimated success rate for each pixel") in a case where each pixel of the tray image 22b is a pick coordinate (corresponding to an example of an "operation position"); and the determination unit 23d that determines the next pick coordinate so as to be a normal example in which the next pick operation succeeds while mixing maximum value selection (corresponding to an example of a "first selection method") for selecting a maximum value point of the pick success rate map 22d and softmax selection (corresponding to an example of a "second selection method") for selecting a probabilistic point according to a ratio with respect to a sum of the pick success rate map 22d. As a result, it is possible to enable higher performance and more efficient learning without manual intervention.

Although the embodiments of the present disclosure have been described above, the technical scope of the present disclosure is not limited to the above-described embodiments as it is, and various modifications can be made without departing from the gist of the present disclosure. Furthermore, components of different embodiments and modification examples may be appropriately combined.

Furthermore, the effects of each embodiment described in the present specification are merely examples and are not limited, and other effects may be provided.

Note that the present technique can also have the following configurations.

(1) A learning device comprising:

an acquisition unit that acquires, from a robot capable of executing a predetermined operation, an image of an operation target after execution of the operation and a determined success/failure result of the operation;
a learning unit that learns, based on the success/failure result, an estimation model in which the image is input and when each of pixels of the image is set as an operation position, an estimated success rate of each of the pixels is output; and
a determination unit that determines a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rate.

(2) The learning device according to (1), wherein
the determination unit mixes the first selection method and the second selection method at a predetermined mixing ratio.

(3) The learning device according to (2), wherein
the determination unit sets the mixing ratio such that a ratio of the second selection method is larger than a ratio of the first selection method.

(4) The learning device according to (2) or (3), wherein
the determination unit adjusts the mixing ratio according to progress of learning executed by the learning unit.

(5) The learning device according to (4), wherein
the determination unit increases the ratio of the second selection method when a moving average of the estimated success rate exceeds a predetermined threshold.

(6) The learning device according to any one of (2) to (5), wherein

the determination unit sets the mixing ratio such that
a ratio of the first selection method to the second selection method is 25:75.

(7) The learning device according to any one of (1) to (6), wherein
the learning unit selects a plurality of the estimation models from a past learning result at the time of new learning, learns the plurality of estimation models in parallel based on the success/failure result at a predetermined initial stage of the new learning, and leaves only the estimation model having the highest estimated success rate through the initial stage for the new learning.

(8) The learning device according to (7), wherein
when selecting a plurality of the estimation models from the past learning result, the learning unit generates a correlation matrix including correlation coefficients of combinations of all pairs of the estimation models included in the past learning result, categorizes the estimation models similar to each other into categories by clustering based on the correlation matrix, and selects a predetermined number of the estimation models so that there is no variation in extraction from each of the categories.

(9) The learning device according to any one of (1) to (8), further comprising

an automatic generation unit that automatically generates a command for executing an action in a case where it is determined, based on the estimated success rate, that the action for changing a state of the operation target is required to be initiated so that the operation next time is easy to be successful.

(10) The learning device according to (9), wherein

the automatic generation unit generates the command when entropy of the operation target calculated based on the estimated success rate is less than a predetermined threshold.

(11) The learning device according to (9) or (10), wherein

the automatic generation unit generates, as the action, the command for causing the robot to perform at least an operation of stirring the operation target.

(12) The learning device according to any one of (1) to (11), wherein

the robot can execute picking for holding workpieces stacked in bulk on a tray and taking out the workpieces from the tray as the operation.

(13) A learning system comprising: a robot system; and a learning device, wherein

the robot system includes:

a robot capable of executing a predetermined operation;
a camera that captures an image of an operation target after execution of the operation; and
a control device that controls the robot and determines a success/failure result of the operation, and
the learning device includes:

an acquisition unit that acquires the image and the success/failure result from the robot system;
a learning unit that learns, based on the success/failure result, an estimation model in which the image is input and when each of pixels of the image is set as an operation position, an estimated success rate of each of the pixels is output; and
a determination unit that determines a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rate.

(14) A learning method comprising:

acquiring, from a robot capable of executing a predetermined operation, an image of an operation target after execution of the operation and a determined success/failure result of the operation;
learning, based on the success/failure result, an estimation model in which the image is input and when each of pixels of the image is set as an operation position, an estimated success rate of each of the pixels is output; and
determining a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rates of the pixels.

(15) A program causing a computer to execute:

acquiring, from a robot capable of executing a predetermined operation, an image of an operation target after execution of the operation and a determined success/failure result of the operation;
learning, based on the success/failure result, an estimation model in which the image is input and when each of pixels of the image is set as an operation position, an estimated success rate of each of the pixels is output; and
determining a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rates of the pixels.

Reference Signs List

1    LEARNING SYSTEM
10    ROBOT SYSTEM
11    ROBOT

| 11a | END EFFECTOR |
|-----|--------------|
| 12 | CAMERA |
| 13 | CONTROL DEVICE |
| 20 | LEARNING DEVICE |
| 22a | LEARNING SAMPLE |
| 22b | TRAY IMAGE |
| 22d | PICK SUCCESS RATE MAP |
| 22e | PAST LEARNING RESULT |
| 23a | ACQUISITION UNIT |
| 23b | ESTIMATION UNIT |
| 23c | OPERATION CONTROL UNIT |
| 23d | DETERMINATION UNIT |
| 23e | TRANSMISSION UNIT |
| 23f | LEARNING UNIT |
| T | TRAY |
| W | WORKPIECE |

**Claims**

1. A learning device comprising:

   an acquisition unit that acquires, from a robot capable of executing a predetermined operation, an image of an operation target after execution of the operation and a determined success/failure result of the operation;
   a learning unit that learns, based on the success/failure result, an estimation model in which the image is input and when each of pixels of the image is set as an operation position, an estimated success rate of each of the pixels is output; and
   a determination unit that determines a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rate.

2. The learning device according to claim 1, wherein
   the determination unit mixes the first selection method and the second selection method at a predetermined mixing ratio.

3. The learning device according to claim 2, wherein
   the determination unit sets the mixing ratio such that a ratio of the second selection method is larger than a ratio of the first selection method.

4. The learning device according to claim 2, wherein
   the determination unit adjusts the mixing ratio according to progress of learning executed by the learning unit.

5. The learning device according to claim 4, wherein
   the determination unit increases the ratio of the second selection method when a moving average of the estimated success rate exceeds a predetermined threshold.

6. The learning device according to claim 2, wherein
   the determination unit sets the mixing ratio such that a ratio of the first selection method to the second selection method is 25:75.

7. The learning device according to claim 1, wherein
   the learning unit selects a plurality of the estimation models from a past learning result at the time of new learning, learns the plurality of estimation models in parallel based on the success/failure result at a predetermined initial stage of the new learning, and leaves only the estimation model having the highest estimated success rate through the initial stage for the new learning.

8. The learning device according to claim 7, wherein

when selecting a plurality of the estimation models from the past learning result, the learning unit generates a correlation matrix including correlation coefficients of combinations of all pairs of the estimation models included in the past learning result, categorizes the estimation models similar to each other into categories by clustering based on the correlation matrix, and selects a predetermined number of the estimation models so that there is no variation in extraction from each of the categories.

9. The learning device according to claim 1, further comprising
an automatic generation unit that automatically generates a command for executing an action in a case where it is determined, based on the estimated success rate, that the action for changing a state of the operation target is required to be initiated so that the operation next time is easy to be successful.

10. The learning device according to claim 9, wherein
the automatic generation unit generates the command when entropy of the operation target calculated based on the estimated success rate is less than a predetermined threshold.

11. The learning device according to claim 9, wherein
the automatic generation unit generates, as the action, the command for causing the robot to perform at least an operation of stirring the operation target.

12. The learning device according to claim 1, wherein
the robot can execute picking for holding workpieces stacked in bulk on a tray and taking out the workpieces from the tray as the operation.

13. A learning system comprising: a robot system; and a learning device, wherein
the robot system includes:

a robot capable of executing a predetermined operation;
a camera that captures an image of an operation target after execution of the operation; and
a control device that controls the robot and determines a success/failure result of the operation, and
the learning device includes:

an acquisition unit that acquires the image and the success/failure result from the robot system;
a learning unit that learns, based on the success/failure result, an estimation model in which the image is input and when each of pixels of the image is set as an operation position, an estimated success rate of each of the pixels is output; and
a determination unit that determines a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rate.

14. A learning method comprising:

acquiring, from a robot capable of executing a predetermined operation, an image of an operation target after execution of the operation and a determined success/failure result of the operation;
learning, based on the success/failure result, an estimation model in which the image is input and when each of pixels of the image is set as an operation position, an estimated success rate of each of the pixels is output; and
determining a position of the operation next time such that the operation next time becomes a normal example of success while mixing a first selection method of selecting a maximum value point of the estimated success rate and a second selection method of selecting a probabilistic point according to a ratio of the estimated success rate to a sum of estimated success rates of the pixels.

# FIG.1

# FIG.2

SUCTION

# FIG.3

S1
INTRODUCE Self-supervised learning

1

10
ROBOT SYSTEM

S13
END EFFECTOR POSITION AND ATTITUDE CONTROL

S14
PICK OPERATION

S15
SUCCESS/FAILURE DETERMINATION

S12
ROBOT COORDINATE SYSTEM TRANSFORMATION

S16
ACQUIRE TRAY IMAGE

S19
·PICK COORDINATES (Xi, Yi)
·SUCCESS/FAILURE LABEL{0, 1}
·LOCAL PATCH IMAGE

S11
PICK COORDINATES (Xi,Yi)

22b
TRAY IMAGE TO BE PROCESSED NEXT TIME

LATEST PICK RESULT

S2
INTRODUCE ACTIVE LEARNING

20
LEARNING DEVICE

S17

22a
LEARNING SAMPLE

S18
DETERMINE PICK COORDINATES

22c
DNN

S20
LEARNING

22d
PICK SUCCESS RATE MAP

S3
ELITE SELECTION FROM PAST LEARNING RESULTS

# FIG.4

S4

AUTOMATICALLY GENERATE STIRRING OPERATION COMMAND FOR WORKPIECES IN BULK IN TRAY

1

20

LEARNING DEVICE

22d

DETERMINE ACTIVATION OF STIRRING OPERATION
S41

AUTOMATICALLY GENERATE STIR-RING OPERATION COMMAND
S42

STIRRING OPERATION COMMAND

10

ROBOT SYSTEM

11

EXECUTE STIRRING OPERATION
S43

ACQUIRE TRAY IMAGE
S16

# FIG.5A

# FIG.5B

20
LEARNING DEVICE

21
COMMUNICATION UNIT

13
CONTROL DEVICE

23
CONTROL UNIT

22
STORAGE UNIT

23a
ACQUISITION UNIT

22a
LEARNING SAMPLE

22b
TRAY IMAGE

23b
ESTIMATION UNIT

22c
DNN

22d
PICK SUCCESS RATE MAP

23c
STIRRING OPERATION CONTROL UNIT

23d
DETERMINATION UNIT

23e
TRANSMISSION UNIT

23f
LEARNING UNIT

22e
PAST LEARNING RESULT

# FIG.5C

**23c**
STIRRING OPERATION CONTROL UNIT

**22d**
PICK SUCCESS RATE MAP

**23ca**
ACTIVATION DETERMINA-TION UNIT

**23cb**
AUTOMATIC GENERATION UNIT

**23d**
DETERMINA-TION UNIT

**23e**
TRANSMISSION UNIT

# FIG.5D

**23d**
DETERMINATION UNIT

**22d**
PICK SUCCESS RATE MAP

**23da**
MAXIMUM VALUE SELEC-TION UNIT

**23db**
SOFTMAX SELECTION UNIT

**23dc**
MIXING UNIT

**23dd**
RATIO ADJUST-MENT UNIT

**23e**
TRANSMIS-SION UNIT

# FIG.5E

23f

LEARNING UNIT

22e

| PAST LEARN-
ING RESULT |

23fa

| PARALLEL
LEARNING UNIT |

23fb

| ELITE SELEC-
TION UNIT |

23fc

| ELITE
LEARNING UNIT |

EP 4 260 994 A1

# FIG.6

BASIC THREE STRATEGIES FOR
DETERMINATION OF PICK COORDINATES IN
ACTIVE LEARNING

| 1 | MAXIMUM VALUE SELECTION | SELECT MAXIMUM PROBABILITY POINT |
| 2 | SOFTMAX SELECTION | SELECT PROBABILISTIC POINT ACCORDING TO RATIO OF PROBABILITY VALUES |
| 3 | RANDOM SELECTION | FULLY RANDOM SELECTION |

# FIG.7

QUANTITATIVE COMPARISON
EXPERIMENT RESULT OF
BASIC THREE STRATEGIES (PART 1)

SUCCESS RATE

NUMBER OF TRIALS

MAXIMUM VALUE SELECTION
RANDOM SELECTION
SOFTMAX SELECTION

23

# FIG.8

QUANTITATIVE COMPARISON EXPERIMENT
RESULT OF BASIC THREE STRATEGIES
(PART 2)

X-axis: NUMBER OF TRIALS REQUIRED TO ACHIEVE SUCCESS RATE OF 70%

Y-axis: AVERAGE SUCCESS RATE AT END OF LEARNING (NUMBER OF TRIALS OF 2000 OR MORE)

Legend:
- MAXIMUM VALUE SELECTION
- RANDOM SELECTION
- SOFTMAX SELECTION

# FIG.9

MIXING MAXIMUM VALUE SELECTION AND
SOFTMAX SELECTION
(MIXING #1)
+
AUTOMATIC ADJUSTMENT OF MIXING RATIO
ACCORDING TO LEARNING PROGRESS
(MIXING #2)

# FIG.10

|  | MAXIMUM VALUE SELECTION | SOFTMAX SELECTION |
|---|---|---|
| MIXING #1 | 25 | 75 |
| MIXING #2 (SUCCESS RATE UP TO 80%) | 25 | 75 |
| MIXING #2 (SUCCESS RATE EXCEEDING 80%) | 0 | 100 |

# FIG.11

COMPARATIVE EXPERIMENT RESULT INCLUDING MIXING #1 AND MIXING #2 (PART 1)

# FIG.12

COMPARATIVE EXPERIMENT RESULT
INCLUDING MIXING #1 AND MIXING #2 (PART 2)

NUMBER OF TRIALS REQUIRED TO ACHIEVE SUCCESS RATE OF 70%

# FIG.13

START

SELECT AND LOAD PLURALITY OF
DNNs TO BE INITIAL VALUES OF
NEW LEARNING FROM
PAST LEARNING RESULT — S31

PERFORM PARALLEL LEARNING ON
SELECTED DNN GROUP DURING INITIAL
STAGE OF NEW LEARNING — S32

SELECT DNN HAVING HIGHEST
SUCCESS RATE AS ELITE DNN — S33

LEAVE ELITE DNN AND
UNLOAD REST — S34

TO NORMAL LEARNING
PROCESSING

# FIG.14

DNN
#1      DNN
#2      ...      DNN
#n

PAST
LEARNING
RESULT — 22e      MULTIPLE
SELECTION

# FIG.15

| 1 | RANDOMLY SELECT PREDETERMINED NUMBER OF DNNs |
|---|---|
| 2 | CATEGORIZE IN ADVANCE ACCORDING TO FEATURES SUCH AS SIZE, COLOR, AND TEXTURE OF WORKPIECE<br>→ SELECT FROM LEARNING RESULT OF WORKPIECE OF SAME CATEGORY AS WORKPIECE TO BE PICKED THIS TIME |
| 3 | PERFORM CLUSTERING BASED ON CORRELATION MATRIX OBTAINED FROM ALL PAIR COMBINATIONS OF PAST LEARNING RESULTS, AND AUTOMATICALLY CATEGORIZE SIMILAR WORKPIECES<br>→ SELECT PREDETERMINED NUMBER OF DNNs SO THAT THERE IS NO VARIATION IN EXTRACTION FROM EACH CATEGORY |

# FIG.16

CORRELATION MATRIX

| | DNN#1 | #2 | #3 | $\cdots$ | #n |
|---|---|---|---|---|---|
| DNN#1 | $C_{11}$ | $C_{12}$ | $C_{13}$ | $\cdots$ | $C_{1n}$ |
| #2 | | $C_{22}$ | $C_{23}$ | $\cdots$ | $C_{2n}$ |
| #3 | | | $\cdots$ | $\cdots$ | $\cdots$ |
| $\vdots$ | | | | | |
| #n | | | | | |

CLUSTERING

| CLUSTER 1: | [{DNN#1,DNN#3,$\cdots$}, |
|---|---|
| CLUSTER 2: | {DNN#2,DNN#9,$\cdots$}, |
| $\vdots$ | $\vdots$ |
| CLUSTER m: | {DNN#25,DNN#27,$\cdots$,$\cdots$}] |

EP 4 260 994 A1

# FIG.17

S32-1

RANDOMLY SELECT DNN THAT
ESTIMATES PICK SUCCESS RATE

DNN
#1

DNN
#2

...

DNN
#n

S32-2

EXECUTE STEPS S17, 18, 11 TO 16, AND 19

DNN
#2

LEARNING
SAMPLE

22a

S32-3

PARALLEL
LEARNING

DNN
#1

DNN
#2

...

DNN
#n

# FIG.18

| 9 TIMES/ 10 TIMES | DETERMINE PICK COORDINATES BY ACTIVE LEARNING |
|---|---|
| 1 TIME/ 10 TIMES | DETERMINE PICK COORDINATES BY MAXIMUM VALUE SELECTION |

S33-1

SUCCESS/ FAILURE RESULT

S33-2

CALCULATE SUCCESS RATE AFTER LEARNING IS REPEATED TO SOME EXTENT

S33-3

SELECT DNN HAVING HIGHEST SUCCESS RATE AS ELITE DNN

# FIG.19

START

S41-1

CALCULATE ENTROPY BASED ON PICK SUCCESS RATE MAP

S41-2

ENTROPY<THRESHOLD?

NO

YES

TO STIRRING OPERATION AUTOMATIC GENERATION PROCESSING (STEP S42)

TO NORMAL PROCESSING (STEP S18)

# FIG.20

$I_t$                 $P_t$

22d   22c   22d

DNN

$H(P_t)$
ENTROPY

# FIG.21

$P_t$

$P_{t,k}$

$H(P_{t,k})$
ENTROPY

# FIG.22

# FIG.23

# FIG.24

# FIG.25

# FIG.26

COMPUTER 1000

CPU 1100

RAM 1200

ROM 1300

1050

STORAGE 1400

PROGRAM DATA 1450

COMMUNICATION INTERFACE 1500

INPUT/OUTPUT INTERFACE 1600

1550

INPUT/OUTPUT DEVICE 1650

## INTERNATIONAL SEARCH REPORT

| | International application No. |
|---|---|
| | **PCT/JP2021/041069** |

**A. CLASSIFICATION OF SUBJECT MATTER**

**B25J 13/08**(2006.01)i; **G06T 7/00**(2017.01)i; **G06N 20/00**(2019.01)i
FI:　B25J13/08 A; G06N20/00 130; G06T7/00 350B

According to International Patent Classification (IPC) or to both national classification and IPC

**B. FIELDS SEARCHED**

Minimum documentation searched (classification system followed by classification symbols)

　　B25J13/08; G06T7/00; G06N20/00

Documentation searched other than minimum documentation to the extent that such documents are included in the fields searched

　　Published examined utility model applications of Japan 1922-1996
　　Published unexamined utility model applications of Japan 1971-2021
　　Registered utility model specifications of Japan 1996-2021
　　Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-58960 A (FANUC LTD) 18 April 2019 (2019-04-18)<br>entire text, all drawings | 1-14 |
| A | JP 2019-32589 A (H2L INC) 28 February 2019 (2019-02-28)<br>entire text, all drawings | 1-14 |
| A | JP 2018-41431 A (UNIV ELECTRO COMMUNICATIONS) 15 March 2018 (2018-03-15)<br>entire text, all drawings | 1-14 |
| A | JP 2015-219166 A (UNIV SHINSHU) 07 December 2015 (2015-12-07)<br>entire text, all drawings | 1-14 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 January 2022** | **01 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/041069**

| Patent document cited in search report | | | Publication date (day/month/year) | Patent family member(s) | | | Publication date (day/month/year) |
|---|---|---|---|---|---|---|---|
| JP | 2019-58960 | A | 18 April 2019 | US entire text, all drawings DE CN | 2019/0091869 102018215826 109551459 | A1 A1 A | |
| JP | 2019-32589 | A | 28 February 2019 | (Family: none) | | | |
| JP | 2018-41431 | A | 15 March 2018 | (Family: none) | | | |
| JP | 2015-219166 | A | 07 December 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017030135 A